# EUROPEAN PATENT SPECIFICATION

(11) **EP 2 823 194 B1**
(45) Date of publication and mention of the grant of the patent: **28.02.2018**
(21) Application number: 07835584.9
(22) Date of filing: 20.07.2007
(51) Int. Cl.: F16D 65/14, B60T 17/08

(54) **SPRING BRAKE ACTUATOR COMPRISING A DUAL THREADED RELEASE BOLT**
FEDERBREMSAKTUATOR MIT EINER ZWEI GEWINDEN VERSEHENE FREIGABESCHRAUBE
ACTIONNEUR DE FREINS À RESSORTS AVEC UN BOULON DE LIBÉRATION À FILETAGE DOUBLE

(30) Priority: 29.08.2006 TR 200604673
(43) Date of publication of application: 14.01.2015
(73) Proprietor: Arfesan Arkan Fren Elemanlari Sanayi VeTicaret A.S., 41480 Kocaeli (TR)
(72) Inventor: AKIN, Ahmet, 41480 Kocaeli (TR); BATTAL, Yavuz, 41480 Kocaeli (TR)
(74) Representative: Karaahmet, Erdogan
(86) International application number: PCT/TR2007/000068
(87) International publication number: WO 2008/027019

(56) References cited:
- EP-A- 0 530 461
- WO-A-97/07322

## Description

### BACKROUND OF THE INVENTION

The present invention relates to the dual threaded release bolt which enables the spring brake actuator to be released faster and easier way as a result of increasing the distance to be taken by the bolt in one turn by increasing the number of its thread.

### PRIOR ART ABOUT THE INVENTION

A spring brake actuator consists of service brake chamber; operating under normal driving conditions and park chamber; steps in if there is air leakage or in case the air is exhausted intentionally. A spring packed in the park chamber is compressed with compressed air. As the spring is released when the compressed air is exhausted by leakage or the air is exhausted intentionally, spring expands and the energy stored in the spring is converted into braking force and provides braking.

In order to move the parked vehicle under conditions other than aforementioned normal driving conditions, the vehicle shall not be in braking position. Therefore the expanded spring in park chamber must be compressed manually and this procedure necessitates a big amount of force. In order to perform this procedure, a threaded shaft - called Release bolt- integrated to actuators are used. As the release bolt is turned, the piston holding the spring compresses the emergency spring. Since the compressed spring does not output force, braking does not occur and the vehicle can be moved.

The concept of "released actuator" means that the emergency spring in the actuator is manually caged. And the system providing to cage this spring manually -which is normally compressed by compressed air- is the releasing system

In such cases where it is not possible to decide if the actuator is released or not by visual check, this invention also enables visual indication by moving one end of the release bolt outside to the canister and the operator is informed about the situation of the actuator.

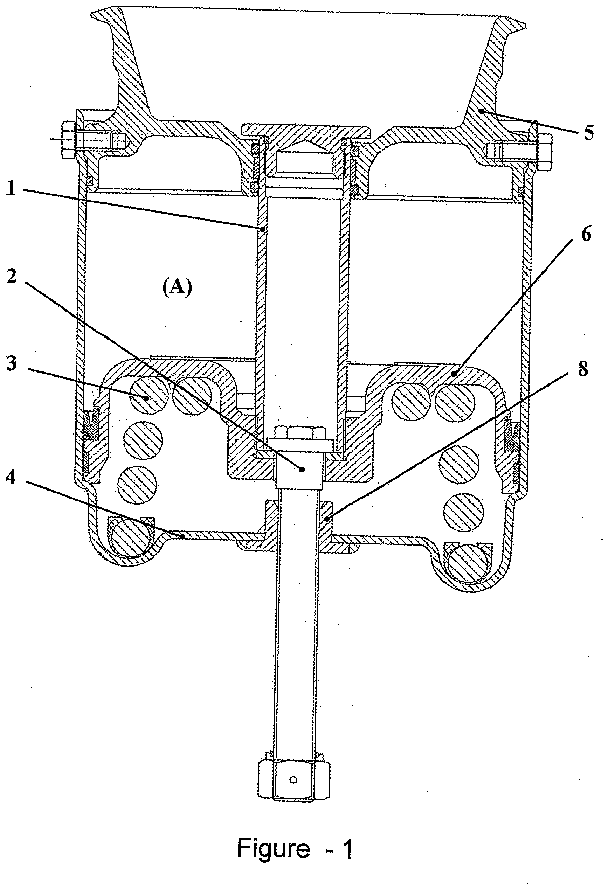

There are two types of mechanical release system used in the spring brake actuators at the present: Concerning the first type of mechanical release system; while the spring inside is compressed by turning the release bolt, the release bolt comes out of the canister (Figure 1). The increase in number of parts and improvements of the constructions especially for the new vehicles, the volume allocated to each part also decreases. Since the part of bolt coming out is long, in some cases it may hit to the other parts on the vehicle, and in some cases the operator can not reach to this part and turn the bolt easily due to the limited -narrow-space.

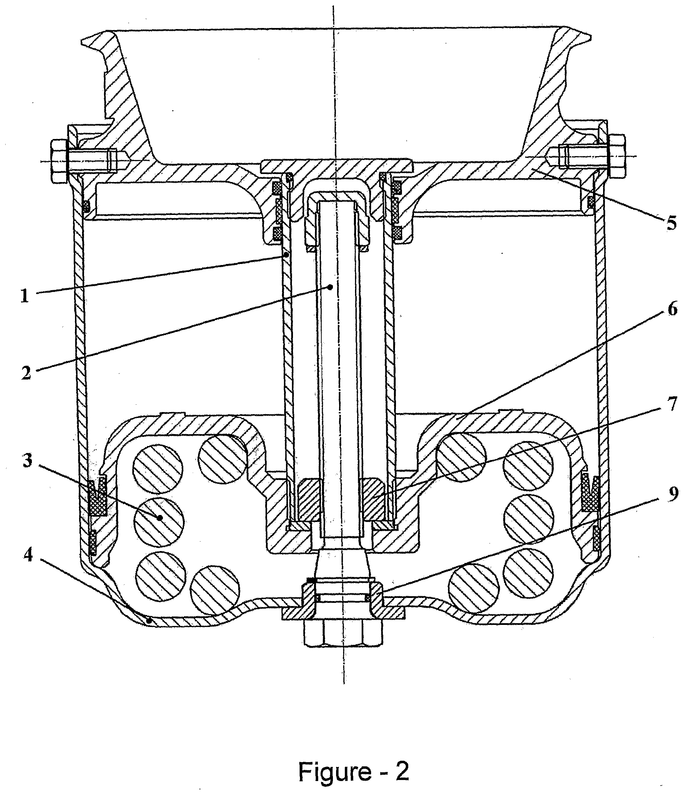

Concerning the second type of mechanical release system (Figure 2); the release bolt does not come out of the canister. The release bolt only turns within a simple bearing located to the canister and thus does not move along. A nut moving as the bolt is turned, actuates the piston and as a result the spring is compressed. Since the release bolt does not comes out, this system is of advantageous than the first type of release bolt system. However this system has a disadvantage because; since the release bolt does not come out, the operator can not decide if the spring brake actuator is released or not by visual checking.

Document EP0530461 A1 discloses a spring brake actuator according to the preamble of claim 1.

### AIMS FOR DEVELOPMENT OF THE INVENTION

With the improvement of this invention relating to the dual threaded release bolt for spring brake actuator it is proposed to accomplish;
- to increase the amount of movement of the release bolt per one revolution by designing the dual threaded release bolt, and by this way,
- to enable a faster release of the actuator
- to enable the release bolt to come out less than existing designs,
- to enable mounting in narrower spaces on the vehicle,
- to enable the operator decide if the spring brake actuator is released or not from a distance by looking to the moving end of release bolt.

### DESCRIPTION OF THE FIGURES

The description of the figures prepared for a better explanation of the dual threaded release bolt for spring brake actuator which is improved with this invention are specified below;
Figure 1 - Spring brake actuator with coming out type of release bolt
Figure 2 - Spring brake actuator with fixed type of release bolt

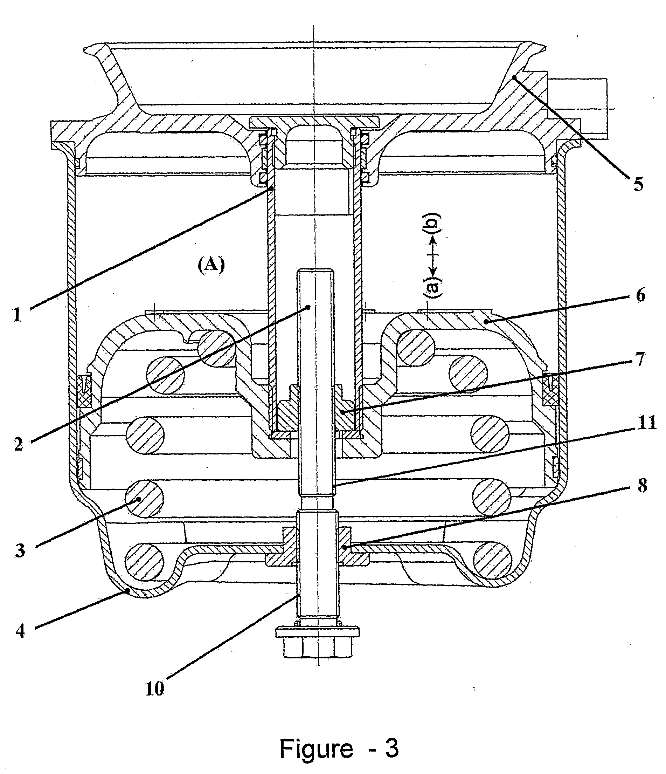

Figure 3 - Spring brake actuator with dual threaded release bolt

### DEFINITION OF THE COMPONENTS (PARTS) ON THE FIGURES

The components-parts-features shown in the figures prepared for a better explanation of the dual threaded release bolt for spring brake actuator improved with this invention are numbered separately and explanation of each number is given below.
1- Piston pipe
2- Release bolt
3- Emergency spring
4- Canister
5- Adapter plate
6- Piston
7- Square nut
8- Threaded bearing
9- Simple bearing
10- Dual threaded Release bolt 1. part
11-Dual threaded Release bolt 2. part

A. Park chamber

### SHORT DESCRIPTION OF THE INVENTION

A spring brake actuator consists of service brake chamber operating under normal driving conditions and park chamber steping in if there is air leakage or in case the air is exhausted intentionally. A spring in the park chamber is compressed with compressed air. As the spring is released when the compressed air is exhausted by leakage or the air is exhausted intentionally, spring expands and the energy stored in the spring is converted into braking force and provides braking.

After the compressed air is exhausted by aforementioned reasons and the spring is expanded, the vehicle can only be moved by manually compressing the spring by using the release bolt.

Compressing the spring necessitates a force adequate in order to cope with the spring resistance and it is hard to maintain this force manually. With improvement of this invention of Dual Threaded Release Bolt, the amount of movement of the release bolt per one revolution is increased and as a result the actuator is released in a faster way.

### DESCRIPTION OF THE INVENTION IN DETAIL

In order to remove the vehicle under conditions other than normal driving conditions, parking or in cases of emergency when there is air leakage; the force necessary for braking is achieved by decompressing the Emergency spring (3). This spring can provide a huge amount of force and during the vehicle is on the move it is stays in compressed position between the piston (6) and the canister (4) as the compressed air in the park chamber (A) pushes the piston (6).

In case there is no air in the system, the emergency spring (3) expands and pushes the piston (6) and aluminium pipe (1) connected to the piston (6), and provides the necessary braking force for the brake system.

The main parts of the dual threaded release bolt (2) for spring brake actuator improved with this invention are; Square Nut (2) attached on the release bolt, Square groove where there is aluminium pipe (1) in which the Square nut (7) moves along, the stage occurred at the connection part of the aluminium pipe (1) and piston (6), the threaded bearing (8) at the place of simple bearing (9) on canister (4); and dual threaded square nut (7).

Square nut (7) is located in the square bearing inside the aluminium pipe (1). Instead of the Square nut (7), triangular or other polygonal nuts can also be used. In this case, there is triangular or polygonal sectioned groove instead of the square groove inside the Aluminium pipe (1).

In case of malfunction within the brake system where there is no compressed air, it shall be possible to compress the emergency spring (3) manually and consequently release the vehicle from parking. In this case, being turned by an appropriate wrench the Release bolt (2) enables the piston (6) to move towards (a) and compresses the emergency Spring (3) and thus force output is prevented. Square Nut (7) attached on the Release bolt (2) can move along towards (a) and (b) directions inside the square bearing within the Aluminium pipe (1). As the release bolt (2) is turned in clockwise, the Square Nut (7) starts moving along (a) direction inside the square groove within the Aluminium pipe (1). After several turns Square Nut (7) seats at the stage formed at the connection part of Aluminium pipe (1) and piston (6). And henceforth moves together with the piston (6) and aluminium pipe (1) - which the piston is attached- towards (a) direction and compresses the emergency spring (5). The difference between the Dual threaded Release bolt and the Spring brake actuator with fixed type of release bolt (Figure 2) is that; the release bolt operates together with the threaded bearing (8) on the canister (4) instead of in a Simple bearing (9) and by this way instead of a simple bearing where it can turn around itself freely, it touches and contacts to threads of the threaded bearing (8) and moves out of the actuator. Two types of threads which are in different directions and in different sizes are threaded on the Release bolt (2). Consequently as we consider the Release bolt (2) consisting of two parts: the first part (10) runs together with the threaded bearing (8) on the canister (4) of the spring brake actuator; and the second part (11) runs together with the square nut (7) inside the aluminium pipe (1) of which has a square groove inside.

Being dual threaded, the threads on the second part (11) provides the Release bolt (2) move forward two times more per one revolution.

The pitch of the dual threaded nut is 2 times of the distance between the top of two threads. Such as; the move of a dual threaded nut will be 1.5 * 2 = 3 mm.

During the releasing process, the Release bolt (2) moves inside the threaded bearing (8) instead of the simple bearing as for the existing designs. Consequently as the bolt turns within a threaded bearing (8), it also moves forward at the same time and only a little but visible part of it comes out of the canister (4). Different from the existing designs, since forward moving occurs also at the first part (10) of the Release bolt (2), deriving from the same example, the Release bolt (2) moves forward a distance of 1.5 mm per one revolution. As a result the Release bolt (2) will totally move a distance of 1.5 * 2 + 1.5 = 4.5 mm per one revolution which is more than the existing designs.

As a result of increased movement of the Release bolt (2); this invention enables the releasing procedure in a faster way, in case of emergencies where releasing the actuator needs to be made manually. Additionally, as part of the Release bolt (2) comes out of the canister (4), the operator is warned about the position of the actuator and operator can understand whether the actuator is released or not.

## Claims

1. Spring brake actuator comprising a piston (6) and a release bolt (2), wherein
• two types of threads which are in different directions and in different sizes are threaded on the release bolt (2), **characterised in that**:
• the release bolt (2) consists of two parts:
• the first part (10) of release bolt (2) runs together with a threaded bearing (8) on the canister (4) of the spring brake actuator; and the second part (11) runs together with a square nut (7) inside an aluminium pipe (1) of which inner side is square edged.
• the threads on the second part (11),being dual threaded, provides the release bolt (2) move forward two times more per one revolution.
• square nut (7) attached on the release bolt (2), square groove in aluminium pipe (1) in which the square nut (7) moves forward,
• the stage occurred at the connection part of the aluminium pipe (1) and piston (6),
• the square nut (7) is dual threaded.

2. Spring brake actuator as claimed in any of the preceding claims mentioned previously wherein the square nut (7) is located inside the square bearing within the aluminium pipe (1).

3. Spring brake actuator as claimed in any of the preceding claims mentioned previously wherein the square nut (7) may be triangle or polygonal nut instead of being square, in this case there is triangle or polygonal sectioned groove instead of the square groove inside the aluminium pipe (1).

## Patentansprüche

1. Federspeicherbremseaktuator umfassend einen Auslösebolzen (2) und einen Kolben (6),
• wobei auf dem Auslösebolzen (2) zwei Gewinde in verschiedenen Richtungen und in verschiedenen Größen ausgebildet sind, wobei der Auslösebolzen (2) aus zwei Teilen besteht: **dadurch gekennzeichnet, dass**:
• der erste Teil (10) des Auslösebolzens (2) mit einem Gewindelager (8) auf der Kanister (4) des Federspeicherbremseaktuators zusammen läuft, und der zweite Teil (11) dagegen in einem Rohr (1) aus Aluminium, dessen innere Seite eine quadratische Kontur aufweist, mit einer Vierkantmutter (7) zusammen läuft,
• die Zähne des zweiten Teils (11) eine Doppelgewinde ist, sodass für jede Drehung des Auslösebolzens (2) eine doppelte Vorwärtsbewegung sichergestellt wird,
• auf dem Auslösebolzen (2) eine Vierkantmutter (7) angebracht ist, und die Innenseite des Aluminiumrohres (1), in dem die Vierkantmutter (7) nach vorne bewegen kann, eine quadratische Nut ist,
• in dem Verbindungsabschnitt des Aluminiumrohres (1) und des Kolbens (6) eine Stufe gebildet ist,
• die Vierkantmutter (7) ein Doppelgewinde hat.

2. Federspeicherbremseaktuator nach einem der vorhergehenden Ansprüche **gekennzeichnet durch** eine Vierkantmutter (7), die innerhalb des Vierkantgewindelagers in dem Aluminiumrohr (1) sich befindet.

3. Federspeicherbremseaktuator nach einem der vorhergehenden Ansprüche **gekennzeichnet durch** eine Dreieck- oder Mehrkantmutter anstatt einer Vierkantmutter (7), wenn man in dem Aluminiumrohr (1) eine Nut mit einem dreieckigen oder polygonalen Querschnitt anstatt einer Nut mit einem quadratischen Querschnitt aufweisen wird.

## Revendications

1. Cylindre de frein à ressort comprenant un piston (6) et un boulon de débrayage (2), dans lequel
• deux types de filets de différentes directions et de tailles différentes sont vissés sur le boulon de débrayage (2),
**caractérisé en ce que**: le boulon de libération (2) est constitué de deux parties:
• la première partie (10) du boulon de débrayage (2) est montée avec un palier fileté (8) la cartouche (4) du cylindre de frein à ressort; et la deuxième partie (11) fonctionne ensemble
avec un écrou carré (7) à l'intérieur d'un tuyau en aluminium (1) dont le côté interne est à bord carré.
• les filets de la seconde partie (111), à double filetage, assurent le boulon de débrayage (2) aller de l'avant deux fois plus par tour.
• écrou carré (7) fixé sur le boulon de débrayage (2), rainure carrée dans le tube en aluminium (1) dans laquelle l'écrou carré (7) avance,
• l'étape s'est produite au niveau de la partie de connexion du tuyau en aluminium (1) et du piston (6),
• l'écrou carré (7) est à double filetage.

2. Cylindre de frein à ressort selon l'une quelconque des revendications précédentes mentionné précédemment dans lequel l'écrou carré (7) est situé à l'intérieur du palier carré dans le tube d'aluminium (1).

3. Cylindre de frein à ressort selon l'une quelconque des revendications précédentes, dans lequel l'écrou carré (7) peut être un écrou triangulaire ou polygonal au lieu d'être carré, dans ce cas il y a une rainure triangulaire ou polygonale au lieu de la rainure carrée à l'intérieur le tuyau en aluminium (1).
